# EUROPEAN PATENT APPLICATION

(11) **EP 3 342 822 A1**
(43) Date of publication of application: **04.07.2018**
(21) Application number: 16839664.6
(22) Date of filing: 26.08.2016
(51) Int. Cl.: C08L 67/02, C08L 69/00, C08L 83/10, C08K 5/00, C08K 3/00, C08J 5/00

(54) **POLYMER RESIN COMPOSITION AND MOLDED PRODUCT THEREOF**

(30) Priority: 26.08.2015 KR 20150120476
(71) Applicant: SK Chemicals Co., Ltd., Gyeonggi-do 13494 (KR)
(72) Inventor: SOHN, Dong-Cheol, Goyang-si Gyeonggi-do 10348 (KR); LEE, Kye Yune, Suwon-si Gyeonggi-do 16324 (KR)
(74) Representative: Modiano, Micaela Nadia
(86) International application number: PCT/KR2016/009540
(87) International publication number: WO 2017/034376

(57) **Abstract**

The present invention relates to a polymer resin composition having excellent compatibility between components, improved mechanical properties, such as heat resistance and tensile strength, and improved molding workability, and to a molded product thereof. Specifically, the polymer resin composition may include: a polyester resin containing a diol-component residue including a heterocyclic aliphatic diol having 3 to 20 carbon atoms and a dicarboxylic acid-component residue, and having a glass transition temperature (measured by DSC) of 90°C or higher; a polycarbonate resin; a polysiloxane-polycarbonate copolymer; and an impact reinforcement member including a core containing a diene-b(meth)acrylate/aromatic vinyl copolymer, and an outer layer shell containing an aromatic vinyl-based polymer.

## Description

### [Technical Field]

### CROSS-REFERENCE TO RELATED APPLICATION

This application claims priority to and the benefit of Korean Patent Application No. 10-2015-0120476 filed in the Korean Intellectual Property Office on August 26, 2015, the entire contents of which are incorporated herein by reference.

The present invention relates to a polymer resin composition and a molded product thereof. More particularly, the present invention relates to a polymer resin composition which is excellent in compatibility between components and has improved mechanical properties such as heat resistance, tensile strength, etc., and improved molding workability, and a molded product thereof.

### [Background Art]

A polyester resin is widely used as reinforcing plastics, paints, films, molding resins, etc., due to characteristics of relatively excellent heat resistance, mechanical strength and elastic strength, and thus is also used as fiber materials for clothes.

In recent years, due to its characteristic physical properties, the polyester resin has been increasingly used in fields of architectural interior materials, molded signboards, or the like. However, the polyester resin has a lower heat resistance than other polymer materials, for example, an acrylic material or a polycarbonate-based material, and thus has a problem in that it is not suitable for being used as an outdoor exterior material having a severe temperature change depending on the season.

Meanwhile, the polycarbonate resin is used in various fields such as exterior appearance of various building materials and electronic products, packaging materials, cases, boxes, and interior and exterior materials, etc., due to excellent characteristics such as impact resistance, heat resistance, etc. The polycarbonate resin is in great demand due to its excellent mechanical properties.

However, the polycarbonate resin has problems in that appearance color of polycarbonate is changed by various cleaning agents, cosmetics for women, and baby hand sanitizers, etc., that are commonly used, or cracks occur, and deterioration of a product is caused by various kinds of life chemicals.

There have been various attempts to solve the problems of the polyester resin or the polycarbonate resin, and research on a method of blending the polyester resin and the polycarbonate resin has been continued.

Meanwhile, since the polyester resin and the polycarbonate resin have different melt viscosities and molecular structures, there is certain limitation in improving the heat resistance by simply blending the resins. In addition, various methods have been used to increase chemical resistance while maintaining mechanical properties, particularly heat resistance, of the polycarbonate.

However, the degree of improvement of the chemical resistance is not sufficient to be practically applicable to the industry. There is a problem in that appearance characteristics of a resin product to be manufactured are deteriorated.

Therefore, development of a resin composition that exhibits improved heat resistance or impact resistance through a blend of a polyester resin and a polycarbonate resin, and is excellent in chemical resistance is required.

### [DISCLOSURE]

### [Technical Problem]

The present invention has been made in an effort to provide a polymer resin composition having advantages of being excellent in compatibility between components and having improved mechanical properties such as heat resistance, tensile strength, etc., and improved molding workability, and a molded product thereof.

### [Technical Solution]

An exemplary embodiment of the present invention provides a polymer resin composition including a polyester resin that includes a diol component residue including a heterocyclic aliphatic diol having 3 to 20 carbon atoms and a dicarboxylic acid component residue, and has a glass transition temperature of 90°C or higher; a polycarbonate resin; a polysiloxane-polycarbonate copolymer; and an impact-reinforcing material that includes a core including a diene-based copolymer, an inner layer shell including an acrylate/aromatic vinyl copolymer, and an outer layer shell including an aromatic vinyl-based polymer.

Another embodiment of the present invention provides a molded product including the polymer resin composition.

Hereinafter, the polymer resin composition and the molded product thereof according to specific exemplary embodiments of the present invention are described in more detail.

In the present specification, the term 'residue' means a predetermined moiety or unit included in a resulting material of a chemical reaction and derived from a specific compound when the specific compound participates in the chemical reaction. For example, each of the 'residue' of the dicarboxylic acid component or the 'residue' of the diol component means a moiety derived from the dicarboxylic acid component or derived from the diol component in a polyester formed by an esterification reaction or a polycondensation reaction.

Further, in the present specification, '(meth)acryl' means to include both acryl and methacryl.

According to an exemplary embodiment of the present invention, there may be provided a polymer resin composition including a polyester resin that includes a diol component residue including a heterocyclic aliphatic diol having 3 to 20 carbon atoms and a dicarboxylic acid component residue, and has a glass transition temperature of 90°C or higher; a polycarbonate resin; a polysiloxane-polycarbonate copolymer; and an impact-reinforcing material that includes a core including a diene-based copolymer, an inner layer shell including an acrylate/aromatic vinyl copolymer, and an outer layer shell including an aromatic vinyl-based polymer.

The present inventors found through experiments that when the above-described specific polymer resin composition was used, compatibility between the polyester resin and the polycarbonate resin could be increased to improve miscibility between the resins in the composition, and thus it was possible to prepare a polymer resin composition having excellent mechanical properties and molding workability and completed the invention.

Particularly, due to the specific polyester resin included in the polymer resin composition, the polymer resin composition may ensure heat resistance simultaneously ensuring transparency, workability, chemical resistance, and may improve environment-friendliness since harmful materials are not included in the components.

Further, through a three-layer structure of the core-inner layer shell-outer layer shell of the impact-reinforcing material included in the polymer resin composition, the impact resistance of the polymer resin composition may be improved, and the compatibility between the polyester resin and the polycarbonate resin may be increased, and thus excellent molding workability may be ensured in processing processes such as extrusion molding, etc.

### Impact-reinforcing material

Specifically, the polymer resin composition may include an impact-reinforcing material that includes a core including a diene-based copolymer, an inner layer shell including an acrylate/aromatic vinyl copolymer, and an outer layer shell including an aromatic vinyl-based polymer.

Specifically, the impact-reinforcing material may include 40 to 90 parts by weight of the core including the diene-based copolymer, 5 to 40 parts by weight of the inner layer shell including the acrylate/aromatic vinyl copolymer, and 5 to 20 parts by weight of the outer layer shell including the aromatic vinyl-based polymer, with respect to a total weight of the impact-reinforcing material. When the weight is out of the above-described range, balance of transparency and impact resistance as the impact-reinforcing material may be broken.

More specifically, the core included in the impact-reinforcing material may include the diene-based copolymer which is obtained by polymerizing a monomer mixture containing 30 wt% to 100 wt%, or 40 wt% to 90 wt%, or 50 wt% to 80 wt% of a diene-based monomer; 0 to 70 wt%, or 10 to 60 wt%, or 20 to 50 wt% of an aromatic vinyl monomer; 0 wt% to 10 wt%, or 0.1 wt% to 10 wt% of a copolymerizable vinyl-based monomer; and 0 wt% to 5 wt%, or 0.1 wt% to 5 wt% of a cross-linking monomer.

When the diene-based monomer is used in the core included in the impact-reinforcing material, it is preferable in view of strength, but it is distant from a refractive index of the polyester resin or the polycarbonate resin. Thus, the diene-based monomer is preferably included in 90 wt% or less in view of transparency. Further, 40 wt% or more of the diene-based monomer is preferably included since an excellent ability of expressing strength is obtained. Examples of the diene-based monomer are not particularly limited, but may include, for example, butadiene, isoprene, and the like.

In addition, the aromatic vinyl monomer included in the core is a compound having one vinyl double bond and one or more benzene nuclei in the same molecule, and may increase the refractive index of the rubber particle to approach the refractive index of the polyester resin or the polycarbonate resin. Specific examples of the aromatic vinyl monomer may include, but are not particularly limited to, styrene, alpha-methylstyrene, 2-methylstyrene, 3-methylstyrene, 4-methylstyrene, 4-ethylstyrene, t-butylstyrene, 2,5-dimethylstyrene, 1,3-dimethylstyrene, 2,4-dimethylstyrene, 4-methoxystyrene, 4-ethoxystyrene, 4-propoxystyrene, 4-butoxystyrene, chlorostyrene, dichlorostyrene, trichlorostyrene, vinyl toluene, bromostyrene, dibromostyrene, tribromostyrene, vinyl naphthalene, isopropenyl naphthalene, isopropenylbiphenyl, divinylbenzene, and alpha-methylstyrene vinyltoluene.

Specific examples of the copolymerizable vinyl monomer included in the core may include, but are not particularly limited to, (meth)acrylic acid ester, (meth)acrylonitrile, (meth)acrylic acid, (meth)acrylic acid phenyl, vinyl cyanide compounds such as vinylidene cyanite, 1,2-dicyanoethylene, etc., maleimide-based compounds, etc.

Specifically, the (meth)acrylic acid ester may be at least one selected from the group consisting of methyl methacrylate, ethyl methacrylate, propyl methacrylate, isopropyl methacrylate, and butyl methacrylate.

Specific examples of the cross-linking monomer included in the core are not particularly limited, but may include di(meth)acrylic acid divinylbenzene monoethyleneglycol and di(meth)acrylic acid ethylene glycol, etc. When a content of the cross-linking monomer is more than 5 wt%, the impact strength may be deteriorated.

Meanwhile, the inner layer shell included in the impact-reinforcing material may include the (meth)acrylate/aromatic vinyl copolymer which is obtained by polymerizing a monomer mixture containing 60 wt% to 98 wt%, or 65 wt% to 95 wt% of an aromatic vinyl monomer; 2 wt% to 40 wt%, or 5 wt% to 35 wt% of a (meth)acrylic acid ester monomer containing a hydroxyl group; and 0 wt% to 20 wt%, or 0.1 wt% to 20 wt% of a copolymerizable vinyl-based monomer.

In the present specification, the term "(meth)acrylate/aromatic vinyl copolymer" means a copolymer obtained by polymerizing a mixture of a (meth)acrylate monomer and an aromatic vinyl monomer.

A method of injecting the monomer mixture for polymerizing the inner layer shell is not particularly limited, and methods such as a continuous one-step addition and a two-step addition, etc., may be used.

In addition, the aromatic vinyl monomer included in the inner layer shell is a compound having one vinyl double bond and one or more benzene nuclei in the same molecule, and may increase the refractive index of the rubber particle to approach the refractive index of the polyester resin. Specific examples of the aromatic vinyl monomer may include, but are not particularly limited to, styrene, alpha-methylstyrene, 2-methylstyrene, 3-methylstyrene, 4-methylstyrene, 4-ethylstyrene, t-butylstyrene, 2,5-dimethylstyrene, 1,3-dimethylstyrene, 2,4-dimethylstyrene, 4-methoxystyrene, 4-ethoxystyrene, 4-propoxystyrene, 4-butoxystyrene, chlorostyrene, dichlorostyrene, trichlorostyrene, vinyl toluene, bromostyrene, dibromostyrene, tribromostyrene, vinyl naphthalene, isopropenyl naphthalene, isopropenylbiphenyl, divinylbenzene, and alpha-methylstyrene vinyltoluene.

Examples of the monomer that contains the (meth)acrylic acid ester containing the hydroxyl group or the alkoxy group included in the inner layer shell may include hydroxyacrylates such as hydroxyethyl acrylate, hydroxypropyl acrylate, etc., hydroxymethacrylates such as hydroxyethyl methacrylate, hydroxypropyl methacrylate, etc., alkoxy acrylates such as methoxyethyl acrylate, ethoxyethyl acrylate, etc., alkoxy methacrylates such as methoxyethyl methacrylate, ethoxyethyl methacrylate, etc., but are not limited thereto.

The monomer that contains the (meth)acrylic acid ester containing the hydroxyl group or the alkoxy group included in the inner layer shell may incrase interfacial adhesion between the polyester resin or the polycarbonate resin and the impact-reinforcing material to ensure compatibility, and may prevent an increase in viscosity during melt mixing.

Specific examples of the copolymerizable vinyl monomer included in the inner layer shell are not particularly limited to, but may include, for example, (meth)acrylic acid ester, (meth)acrylonitrile, (meth)acrylic acid, (meth)acrylic acid phenyl, vinyl cyanide compounds such as vinylidene cyanite, 1,2-dicyanoethylene, etc., maleimide-based compounds, etc.

Specifically, the (meth)acrylic acid ester may be at least one selected from the group consisting of methyl methacrylate, ethyl methacrylate, propyl methacrylate, isopropyl methacrylate, and butyl methacrylate.

Meanwhile, the outer shell included in the impact-reinforcing material may include an aromatic vinyl-based polymer which is obtained by polymerizing a monomer mixture containing 10 wt% to 100 wt% of an aromatic vinyl monomer; 0 wt% to 90 wt% of alkyl(meth)acrylate having 1 to 8 carbon atoms in the alkyl group; and 0 wt% to 50 wt% of a copolymerizable vinyl-based monomer.

A method of injecting the monomer mixture for polymerizing the outer layer shell is not particularly limited, and methods such as a continuous one-step addition and a two-step addition, etc., may be used.

The aromatic vinyl monomer included in the outer layer shell is a compound having one vinyl double bond and one or more benzene nuclei in the same molecule, and may increase the refractive index of the rubber particle to approach the refractive index of the polyester resin. Specific examples of the aromatic vinyl monomer may include, but are not particularly limited to, styrene, alpha-methylstyrene, 2-methylstyrene, 3-methylstyrene, 4-methylstyrene, 4-ethylstyrene, t-butylstyrene, 2,5-dimethylstyrene, 1,3-dimethylstyrene, 2,4-dimethylstyrene, 4-methoxystyrene, 4-ethoxystyrene, 4-propoxystyrene, 4-butoxystyrene, chlorostyrene, dichlorostyrene, trichlorostyrene, vinyl toluene, bromostyrene, dibromostyrene, tribromostyrene, vinyl naphthalene, isopropenyl naphthalene, isopropenylbiphenyl, divinylbenzene, and alpha-methylstyrene vinyltoluene.

The alkyl(meth)acrylate included in the outer layer shell may improve dispersibility with the polyester resin or the polycarbonate resin. Specifically, examples of the alkyl(meth)acrylate may include at least one selected from the group consisting of methyl methacrylate, ethyl methacrylate, propyl methacrylate, isopropyl methacrylate, and butyl methacrylate.

Specific examples of the copolymerizable vinyl monomer included in the inner layer shell are not particularly limited to, but may include, for example, (meth)acrylic acid ester, (meth)acrylonitrile, (meth)acrylic acid, (meth)acrylic acid phenyl, vinyl cyanide compounds such as vinylidene cyanite, 1,2-dicyanoethylene, etc., maleimide-based compounds, etc.

In addition, a particle diameter of the core included in the impact-reinforcing material is not particularly limited, but may be 0.05 µm to 0.1 µm, or 0.06 µm to 0.08 µm. When the particle diameter of the core included in the impact-reinforcing material is less than 0.05 µm, it may be difficult to secure a sufficient level of impact strength. When the particle diameter of the core included in the impact-reinforcing material is more than 0.1 µm, it may be difficult to secure transparency.

Examples of a method for manufacturing the impact-reinforcing material are also not particularly limited, and various known methods for forming a core-shell structure, for example, emulsion polymerization, suspension polymerization, solution polymerization, etc., may be used without limitation.

A content of the impact-reinforcing material may be 0.1 wt% to 10 wt% with respect to a total content of the polymer resin composition. When the content of the impact-reinforcing material is less than 0.1 wt%, an effect of improving the impact resistance by the impact-reinforcing material may be reduced. When the content of the impact-reinforcing material is more than 10 wt%, transparency may decrease, and thus coloring property for various color expression may be deteriorated.

The polymer resin composition may further include, as the impact-reinforcing material, at least one copolymer selected from the group consisting of an unsaturated nitrile-diene rubber-aromatic vinyl graft copolymer, an alkyl methacrylate-diene rubber-aromatic vinyl graft copolymer, and an alkyl methacrylate-silicone/alkyl acrylate graft copolymer.

### Polycarbonate resin

The polycarbonate resin may include one or two or more selected from the group consisting of a polycarbonate resin in which a melt mass-flow rate (300°C, 1.2 kg load) measured by ASTM D1238 is less than 5 g/10 min; a polycarbonate resin in which a melt mass-flow rate (300°C, 1.2 kg load) measured by ASTM D1238 is 5 g/10 min to 11 g/10 min; a polycarbonate resin in which a melt mass-flow rate (300°C, 1.2 kg load) measured by ASTM D1238 is more than 11 g/10 min.

An example of the polycarbonate resin in which the melt mass-flow rate (300°C 1.2 kg load) measured by the ASTM D1238 is less than 5 g/10 min may include TRIREX 3030PJ (manufactured by Samyang Corp.), an example of the polycarbonate resin in which the melt mass-flow rate (300°C, 1.2 kg load) measured by the ASTM D1238 is 5 g/10 min to 11 g/10 min may include TRIREX 3025PJ (manufactured by Samyang Corp.), and a specific example of the polycarbonate resin in which the melt mass-flow rate (300°C 1.2 kg load) measured by the ASTM D1238 is more than 11 g/10 min may include TRIREX 3022PJ (manufactured by Samyang Corp.).

The melt mass-flow rate (MFR) is a measure of fluidity of a polymer material. A large MFR means a low viscosity and a small MFR means a large viscosity. In the case of the same material, it is known that the smaller the MFR, the higher a breaking point of the tensile strength, elongation, the impact strength and environmental stress crack resistance.

A content of the polycarbonate resin may be 5 wt% to 90 wt%, or 50 wt% to 80 wt%, or 50 wt% to 70 wt% based on a total weight of the polymer resin composition.

The polycarbonate may have a glass transition temperature of 50 to 200°C and a weight average molecular weight of 10,000 to 200,000. The glass transition temperature may be confirmed through DSC measurement data, etc. For example, the glass transition temperature may be measured by using a method including maintaining the polycarbonate resin at 300°C for 5 minutes, followed by slowly cooling to room temperature, and re-scanning at a heating speed of 10°C/min, etc. Examples of the method for measuring the weight average molecular weight are not particularly limited, but for example, a weight average molecular weight on polystyrene conversion measured by GPC may be used.

When the weight average molecular weight of the polycarbonate resin is less than 10,000, mechanical properties such as impact strength and tensile strength, etc., may be greatly deteriorated. When the weight average molecular weight of the polycarbonate resin is more than 200,000, molding workability may be decreased due to an increase in melt viscosity.

The polycarbonate resin means a polymer including a carbonate functional group, for example, may be a linear polycarbonate resin, a branched polycarbonate resin, a copolycarbonate resin, a polyester carbonate resin or a mixture of two or more thereof. The polycarbonate resin, a method for manufacturing the polycarbonate resin, and the use of the polycarbonate resin may be used without limitation by applying contents of a thermoplastic aromatic polycarbonate resin that is commonly used in the art. However, in specific examples, the aromatic polycarbonate resin may be prepared from divalent phenol, a carbonate precursor, and a molecular weight regulator. Specific examples of the divalent phenol may include, but are not particularly limited to, bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane(bisphenol A), etc.

Examples of the carbonate precursor are also not particularly limited, but may include, for example, as another monomer constituting the aromatic polycarbonate resin, carbonyl chloride (phosgene), carbonyl bromide, bishaloformate, diphenyl carbonate, dimethyl carbonate, etc.

As the molecular weight regulator, a material that is already known in the art, i.e., a monofunctional compound similar to the monomer used in manufacturing the thermoplastic aromatic polycarbonate resin may be used. Examples of the molecular weight regulator may include phenol-based derivatives (for example, para-isopropylphenol, para-tert-butylphenol (PTBP), para-cumylphenol, para-isooctylphenol, para-isononylphenol, etc.), aliphatic alcohols, etc.

### Polysiloxane-polycarbonate copolymer

The polysiloxane-polycarbonate copolymer may include a block copolymer including a polysiloxane repeating unit and a polycarbonate repeating unit. In particular, excellent impact resistance may be ensured by the polysiloxane repeating unit.

A content of the polysiloxane-polycarbonate copolymer may be 1 to 90 wt%, or 3 to 20 wt% based on a total weight of the polymer resin composition.

Specifically, the polysiloxane-polycarbonate copolymer may contain 1 to 20 wt% of the polysiloxane repeating unit. When the content of the polysiloxane repeating unit is more than 20 wt%, a molecular weight of the polysiloxane-polycarbonate copolymer may be excessively increased, flowability and moldability may be deteriorated, and economic efficiency may be reduced due to an increase of manufacturing costs. On the other hand, when the content of the polysiloxane repeating unit is less than 1 wt%, an effect of improving the impact resistance by the addition of the polysiloxane-polycarbonate copolymer may not be sufficiently implemented.

The polysiloxane-polycarbonate copolymer may have a glass transition temperature of 50 to 200°C, and a weight average molecular weight of 10,000 to 200,000. For example, the glass transition temperature may be confirmed through DSC measurement data, etc. For example, the glass transition temperature may be measured by using a method including maintaining the polysiloxane-polycarbonate copolymer at 300°C for 5 minutes, followed by slowly cooling to room temperature, and re-scanning at a heating speed of 10°C/min, etc. Examples of the method for measuring the weight average molecular weight are not particularly limited, but for example, a weight average molecular weight on polystyrene conversion measured by GPC may be used.

When the weight average molecular weight of the polysiloxane-polycarbonate copolymer is less than 10,000, the effect of improving the impact resistance may be insignificant. When the weight average molecular weight is more than 200,000, reactivity may be deteriorated, and thus it may be difficult to synthesize the polysiloxane-polycarbonate copolymer at a desired molecular weight.

The polysiloxane-polycarbonate copolymer, a method for manufacturing the polysiloxane-polycarbonate copolymer, and the use of the polysiloxane-polycarbonate copolymer may be used without limitation as commonly used in the art. However, in specific examples, the polysiloxane-polycarbonate copolymer may include a hydroxyl-terminated siloxane represented by Chemical Formula 1a or 1 below and a polycarbonate block represented by Chemical Formula 4 as repeating units: 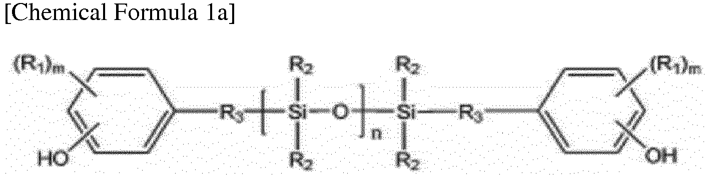 in Chemical Formula 1a, R₁ is independently a hydrogen atom, a halogen atom, a hydroxy group, an alkyl group having 1 to 20 carbon atoms, an alkoxy group having 1 to 20 carbon atoms or an aryl group having 1 to 20 carbon atoms. For example, the halogen atom may be Cl or Br, the alkyl group may be an alkyl group having 1 to 13 carbon atoms, such as methyl, ethyl or propyl, the alkoxy group may be an alkoxy group having 1 to 13 carbon atoms, such as methoxy, ethoxy or propoxy, and the aryl group may be an aryl group having 6 to 10 carbon atoms, such as phenyl, chlorophenyl or tolyl.

R₂ is independently a hydrocarbon group having 1 to 13 carbon atoms or a hydroxy group. For example, R₂ is an alkyl group or an alkoxy group having 1 to 13 carbon atoms, an alkenyl group or an alkenyloxy group having 2 to 13 carbon atoms, a cycloalkyl group or a cycloalkoxy group having 3 to 6 carbon atoms, an aryloxy group having 6 to 10 carbon atoms, an aralkyl group or an aralkoxy group having 7 to 13 carbon atoms, or an alkaryl group or an alkaryloxy group having 7 to 13 carbon atoms.

R₃ is independently an alkylene group having 2 to 8 carbon atoms.

m is independently an integer of 0 to 4.

n independently an integer of 30 to 200, or an integer of 40 to 170, or an integer of 50 to 120. 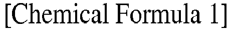 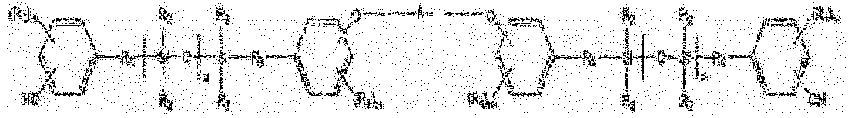 in Chemical Formula 1, R₁, R₂, R₃ and m are the same as defined in Chemical Formula 1a above and n is independently an integer of 15 to 100, or an integer of 20 to 80, or an integer of 25 to 60.

A is a structure of Chemical Formula 2 or 3 below: 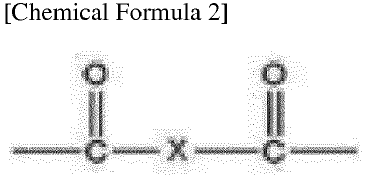 in Chemical Formula 2,
X is Y or NH-Y-NH, wherein Y is a linear or branched aliphatic group having 1 to 20 carbon atoms, a cycloalkylene group (e.g., a cycloalkylene group having 3 to 6 carbon atoms), or a halogen atom, an alkyl group, an alkoxy group, an aryl group or a mononuclear or polynuclear arylene group having 6 to 30 carbon atoms and unsubstituted or substituted with a carboxyl group. For example, Y may be an aliphatic group unsubstituted or substituted with a halogen atom or an aliphatic group including an oxygen, nitrogen or sulfur atom in a main chain, or an arylene group that may be derived from bisphenol A, resorcinol, hydroquinone or diphenylphenol, and may be represented by, for example, Chemical Formulas 2a to 2h below: 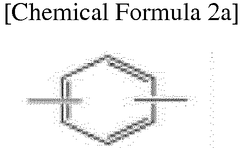 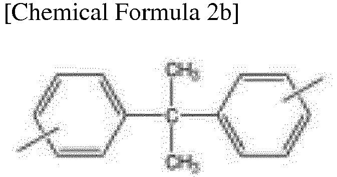 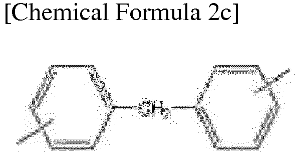 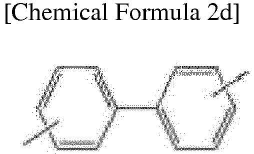 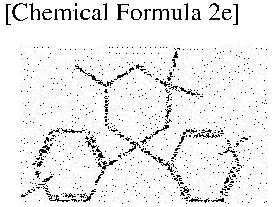 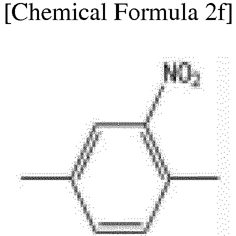 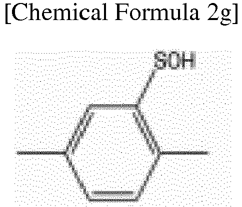 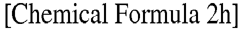 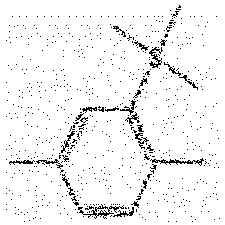 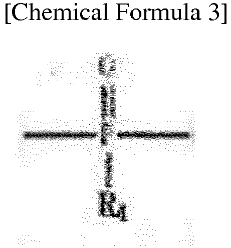 in Chemical Formula 3,
R₄ is an aromatic hydrocarbon group or an aromatic/aliphatic mixed hydrocarbon group having 6 to 30 carbon atoms or an aliphatic hydrocarbon group having 1 to 20 carbon atoms. Here, R₄ may have a structure including halogen, oxygen, nitrogen or sulfur in addition to carbon atoms. For example, R₄ may be phenyl, chlorophenyl or tolyl (preferably phenyl).

In an exemplary embodiment, the hydroxy-terminated siloxane represented by Chemical Formula 1 may be a reaction product of the above-described hydroxy-terminated siloxane represented by Chemical Formula 1a (wherein n is an integer of 15 to 100) and an acyl compound.

Here, the acyl compound may have, for example, an aromatic structure, an aliphatic structure or a mixed structure including both of aromatic and aliphatic groups. When the acyl compound has the aromatic structure or the mixed structure, the acyl compound may have 6 to 30 carbon atoms, and when the acyl compound has the aliphatic structure, the acyl compound may have 1 to 20 carbon atoms. The acyl compound may further include a halogen, an oxygen, a nitrogen or a sulfur atom.

In another exemplary embodiment, the hydroxy-terminated siloxane represented by Chemical Formula 1 may be a reaction product of the hydroxy-terminated siloxane represented by Chemical Formula 1a (wherein n is an integer of 15 to 100) and a diisocyanate compound.

Here, the diisocyanate compound may be, for example, 1,4-phenylenediisocyanate, 1,3-phenylenediisocyanate or 4,4'-methylenediphenyl diisocyanate.

In another exemplary embodiment, the hydroxy-terminated siloxane represented by Chemical Formula 1 may be a reaction product of the hydroxy-terminated siloxane represented by Chemical Formula 1a (wherein n is an integer of 15 to 100) and a phosphorus-containing compound (aromatic or aliphatic phosphate compound).

Here, the phosphorus-containing compound may be represented by Chemical Formula 1b below: 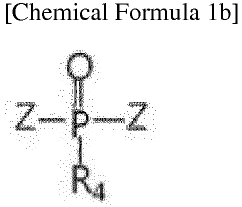 in Chemical Formula 1b, R₄ is the same as defined in Chemical Formula 3, and Z is independently phosphorus, a halogen atom, a hydroxyl group, a carboxyl group, an alkyl group, an alkoxy group, or an aryl group (having 1 to 20 carbon atoms).

The polycarbonate block included as the repeating unit in the polysiloxane-polycarbonate copolymer according to the present invention is represented by Chemical Formula 4 below: 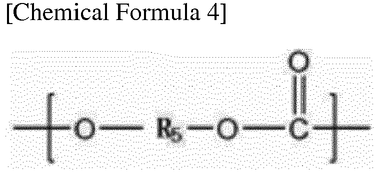 in Chemical Formula 4, R₅ is (C1-C20) alkyl group (e.g., an alkyl group having 1 to 13 carbon atoms), cycloalkyl group (e.g., a cycloalkyl group having 3 to 6 carbon atoms), alkenyl group (e.g., an alkenyl group having 2 to 13 carbon atoms), alkoxy group (e.g., an alkoxy group having 1 to 13 carbon atoms), a halogen atom, or an aromatic hydrocarbon group unsubstituted or substituted with nitro and having 6 to 30 carbon atoms.

Here, the aromatic hydrocarbon group may be derived from a compound having a structure of Chemical Formula 4a below: 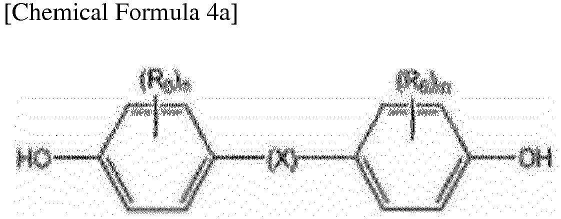 in Chemical Formula 4a, X is an alkylene group, a linear, branched or cyclic alkylene group having no functional group, or a linear, branched or cyclic alkylene group including a functional group such as sulfide, ether, sulfoxide, sulfone, ketone, naphthyl, or isobutylphenyl. Further, X may be a linear or branched alkylene group having 1 to 10 carbon atoms or a cyclic alkylene group having 3 to 6 carbon atoms.

R₆ is independently, a hydrogen atom, a halogen atom, or an alkyl group, for example, a linear or branched alkyl group having 1 to 20 carbon atoms or a cyclic alkyl group having 3 to 20 carbon atoms (preferably 3 to 6 carbon atoms).

n and m are independently an integer of 0 to 4.

The compound represented by Chemical Formula 4a may be, for example, bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane, 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)nonane, 2,2-bis(3-methyl-4-hydroxyphenyl)propane, 2,2-bis(3-fluoro-4-hydroxyphenyl)propane, 4-methyl-2,2-bis (4-hydroxyphenyl)pentane, 4,4-bis(4-hydroxyphenyl)heptane, diphenyl-bis (4-hydroxyphenyl)methane, resorcinol, hydroquinone, 4,4'-dihydroxyphenyl ether[bis(4-hydroxyphenyl)ether], 4,4'-dihydroxy-2,5-dihydroxydiphenyl ether, 4,4'-dihydroxy-3,3'-dichlorodiphenyl ether, bis(3,5-dimethyl-4-hydroxyphenyl)ether, bis(3,5-dichloro-4-hydroxyphenyl)ether, 1,4-dihydroxy-2,5-dichlorobenzene, 1,4-dihydroxy-3-methylbenzene, 4,4'-dihydroxydiphenol[p,p'-dihydroxyphenyl], 3,3'-dichloro-4,4'-dihydroxyphenyl, 1,1-bis(4-hydroxyphenyl)cyclohexane, 1,1-bis(3,5-dimethyl-4-hydroxyphenyl)cyclohexane, 1,1-bis(3,5-dichloro-4-hydroxyphenyl)cyclohexane, 1,1-bis(3,5-dimethyl-4-hydroxyphenyl)cyclododecane, 1,1-bis(4-hydroxyphenyl)cyclododecane, 1,1-bis(4-hydroxyphenyl)butane, 1,1-bis(4-hydroxyphenyl)decane, 1,4-bis(4-hydroxyphenyl)propane, 1,4-bis(4-hydroxyphenyl)butane, 1,4-bis(4-hydroxyphenyl)isobutane, 2,2-bis(4-hydroxyphenyl)butane, 2,2-bis(3-chloro-4-hydroxyphenyl)propane, bis(3,5-dimethyl-4-hydroxyphenyl)methane, bis(3,5-dichloro-4-hydroxyphenyl)methane, 2,2-bis(3,5-dimethyl-4-hydroxyphenyl)propane, 2,2-bis(3,5-dibromo-4-hydroxyphenyl)propane, 2,2-bis(3,5-dichloro-4-hydroxyphenyl)propane, 2,4-bis(4-hydroxyphenyl)-2-methylbutane, 4,4'-thiodiphenol[bis(4-hydroxyphenyl)sulfone], bis(3,5-dimethyl-4-hydroxyphenyl)sulfone, bis(3-chloro-4-hydroxyphenyl)sulfone, bis(4-hydroxyphenyl)sulfide, bis(4-hydroxyphenyl)sulfoxide, bis(3-methyl-4-hydroxyphenyl)sulfide, bis (3,5-dimethyl-4-hydroxyphenyl) sulfide, bis(3,5-dibromo-4-hydroxyphenyl)sulfoxide, 4,4'-dihydroxybenzophenone, 3,3',5,5'-tetramethyl-4,4'-dihydroxybenzophenone, 4,4'-dihydroxy diphenyl, methylhydroquinone, 1,5-dihydroxynaphthalene and 2,6-dihydroxynaphthalene, but is not limited thereto. A representative example is 2,2-bis(4-hydroxyphenyl)propane (bisphenol A).

In the case of the carbonate precursor, as other monomers of the polycarbonate resin, for example, carbonyl chloride (phosgene), carbonyl bromide, bishaloformate, diphenyl carbonate, dimethyl carbonate, etc., may be used.

In the present specification, the alkyl group is a monovalent functional group derived from alkane, and may be for example, linear, branched or cyclic methyl, ethyl, propyl, isobutyl, sec-butyl, tert-butyl, pentyl, hexyl, etc. The aryl group is a monovalent functional group derived from arene, and may be, for example, monocyclic or polycyclic. Specific examples of the monocyclic aryl group may include, but are not limited to, a phenyl group, a biphenyl group, a terphenyl group, a stilbenyl group, etc. The alkylene group is a bivalent functional group derived from alkane, and may be, for example, linear, branched or cyclic methylene group, ethylene group, propylene group, isobutylene group, sec-butylene group, tert-butylene group, pentylene group, hexylene group, etc. The arylene group may be a bivalent functional group derived from arene, and may be, for example, a phenylene group, a biphenylene group, a terphenylene group, a stilbenylene group, a naphthylenyl group, etc., but is not limited thereto. The term "alkenyl group" or "alkynyl group" means that at least one carbon-carbon double bond or triple bond is contained in the middle or end of the alkylene group, respectively, and may be, for example, ethylene, propylene, butylene, hexylene, and acetylene, etc. The "halogen atom" may be, for example, fluorine (F), chlorine (CI), bromine (Br) or iodine (I). The aralkyl group means that at least one hydrogen atom of the above-defined alkyl group is substituted with an aryl group, and the alkaryl group means that at least one hydrogen atom of the above-defined aryl group is substituted with an alkyl group. The alkoxy group means that the alkyl group is bonded to one end of an ether group.

At least one hydrogen atom included in the alkyl group, aryl group, alkylene group, arylene group, alkenyl group, alkynyl group, aralkyl group, alkaryl group and alkoxy group may be substituted with another substituent, wherein the substituent may be, for example, an alkyl group having 1 to 10 carbon atoms, an alkenyl group having 2 to 10 carbon atoms, an alkynyl group having 2 to 10 carbon atoms, an aryl group having 6 to 12 carbon atoms, a heteroaryl group having 2 to 12 carbon atoms, an arylalkyl group having 6 to 12 carbon atoms, a halogen atom, a cyano group, an amino group, an amidino group, a nitro group, an amide group, a carbonyl group, a hydroxyl group, a sulfonyl group, a carbamate group, and an alkoxy group having 1 to 10 carbon atoms, etc.

The term "substituted" means that other functional groups instead of a hydrogen atom in the compound are bonded, and a position to be substituted is not limited as long as it is a position at which the hydrogen atom is substituted, that is, a position at which it is substitutable with the substituent. When two or more substituents are substituted, the two or more substituents may be the same or different from each other.

### Polyester resin

A content of the polyester resin may be 5 to 90 wt%, or 20 to 50 wt% based on the total weight of the polymer resin composition.

Specifically, the polyester resin may include the diol component residue including a heterocyclic aliphatic diol having 3 to 20 carbon atoms and the dicarboxylic acid component residue.

The 'dicarboxylic acid component' may include a dicarboxylic acid such as terephthalic acid, or the like, an alkyl ester thereof (lower alkyl ester having 1 to 4 carbon atoms such as monomethyl, monoethyl, dimethyl, diethyl, dibutyl ester, or the like) and/or an acid anhydride thereof, and may react with a diol component to form a dicarboxylic acid moiety such as a terephthaloyl moiety, or the like.

The dicarboxylic acid component may include an aromatic dicarboxylic acid having 8 to 20 carbon atoms or an aliphatic dicarboxylic acid having 4 to 20 carbon atoms, and thus physical property such as heat resistance, chemical resistance, weather resistance (for example, decrease in molecular weight due to UV or prevention of yellowing phenomenon), or the like, of the polyester resin to be manufactured, may be improved.

Examples of the aromatic dicarboxylic acid having 8 to 20 carbon atoms may include, but are not particularly limited to, terephthalic acid, phthalic acid, isophthalic acid, naphthalenedicarboxylic acid, diphenyl dicarboxylic acid, 4,4'-stilbenedicarboxylic acid, 2,5-furandicarboxylic acid, 2,5-thiophenedicarboxylic acid, etc.

Examples of the aliphatic dicarboxylic acid component having 4 to 20 carbon atoms may include, but are not particularly limited to, cyclohexane dicarboxylic acids such as 1,4-cyclohexane dicarboxylic acid, 1,3-cyclohexane dicarboxylic acid, etc., linear, branched or cyclic aliphatic dicarboxylic acid components such as sebacic acid, succinic acid, isodecylsuccinic acid, maleic acid, fumaric acid, adipic acid, glutaric acid, azelaic acid, etc.

Specifically, the dicarboxylic acid component may include 50 to 100 mol%, or 70 to 100 mol% of terephthalic acid; and a residual amount of other dicarboxylic acids. The other dicarboxylic acid may include an aromatic dicarboxylic acid and an aliphatic dicarboxylic acid except for the terephthalic acid. When a content of terephthalic acid in the dicarboxylic acid component is excessively small or excessively large, physical property such as heat resistance, chemical resistance, weather resistance, or the like, of the polyester resin may be deteriorated.

Meanwhile, the diol component may include a heterocyclic aliphatic diol having 3 to 20 carbon atoms. The heterocyclic aliphatic diol having 3 to 20 carbon atoms means a compound in which at least one carbon atom is substituted with a heteroatom in a cyclic aliphatic diol, which is a compound in which two hydroxyl groups (-OH) are substituted in a cyclic aliphatic compound. The hetero atom is an atom other than carbon or hydrogen and includes, for example, oxygen, nitrogen, phosphorus, sulfur, and the like. By including the heterocyclic aliphatic diol having 3 to 20 carbon atoms as the diol component, not only the heat resistance but also the physical properties such as chemical resistance and resistance against medicine, etc., of the polyester resin may be improved.

Examples of the heterocyclic aliphatic diol having 3 to 20 carbon atoms are not particularly limited, but may include, for example, a compound represented by Chemical Formula 24 below: 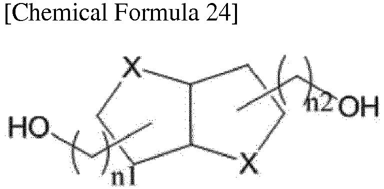 in Chemical Formula 24, n1 and n2 may be each independently an integer of 0 to 3, and X may be oxygen or sulfur.

A more specific example of the compound represented by Chemical Formula 24 may include a compound represented by Chemical Formula 25 below: 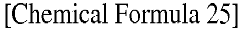 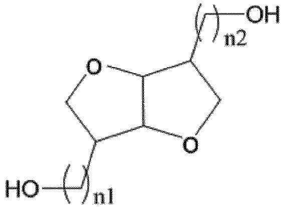 in Chemical Formula 25, n1 and n2 are each independently an integer of 0 to 3. A specific example of the compound represented by Chemical Formula 24 or 25 may include dianhydrohexitol, and a specific example of the dianhydrohexitol may include isosorbide (1,4:3,6-dianhydroglucitol).

The heterocyclic aliphatic diol having 3 to 20 carbon atoms may be included in a content of 5 to 60 mol% with respect to the total diol component. When the content of the heterocyclic aliphatic diol having 3 to 20 carbon atoms in the diol component is less than 5 mol%, it is difficult to sufficiently implement the heat resistance or the chemical resistance of the polyester resin to be manufactured, and a desired melt viscosity characteristic of the polyester resin may not be exhibited. Further, when the content of the heterocyclic aliphatic diol having 3 to 20 carbon atoms is more than 60 mol%, the polyester resin or the product may have deteriorated appearance characteristic or yellowing phenomenon.

In addition, the diol component may further include a heterocyclic aliphatic diol having 3 to 20 carbon atoms. The cyclic aliphatic diol having 3 to 20 carbon atoms means a compound in which two hydroxyl groups (-OH) are substituted in the cyclic aliphatic compound. Examples of the cyclic aliphatic diol having 3 to 20 carbon atoms are not particularly limited, but may include, for example, a compound represented by Chemical Formula 21 or 22 below: 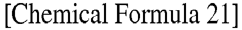 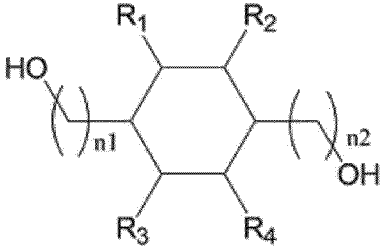 in Chemical Formula 21, R₁, R₂, R₃ and R₄ are each independently hydrogen or a substituted or unsubstituted alkyl group having 1 to 5 carbon atoms, and n1 and n2 are each independently an integer of 0 to 3, and 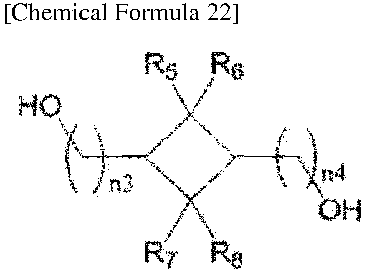 in Chemical Formula 22, R₅, R₆, R₇ and R₈ are each independently hydrogen or a substituted or unsubstituted alkyl group having 1 to 5 carbon atoms, and n3 and n4 are each independently an integer of 0 to 3.

The alkyl group is a monovalent functional group derived from alkane, and may be, for example, linear, branched or cyclic methyl, ethyl, propyl, isobutyl, sec-butyl, tert-butyl, pentyl, hexyl, etc.

In the substituted or unsubstituted form, 'substituted' means that the hydrogen atom included in the alkyl group is replaced by a functional group. Examples of the functional group may include, but are not particularly limited to, an alkyl group having 1 to 10 carbon atoms, an alkenyl group having 2 to 10 carbon atoms, an alkynyl group having 2 to 10 carbon atoms, an aryl group having 6 to 12 carbon atoms, a heteroaryl group having 2 to 12 carbon atoms, an arylalkyl group having 6 to 12 carbon atoms, a halogen atom, a cyano group, an amino group, an amidino group, a nitro group, an amide group, a carbonyl group, a hydroxyl group, a sulfonyl group, a carbamate group, an alkoxy group having 1 to 10 carbon atoms, etc.

A more specific example of the compound represented by Chemical Formula 21 may include 1,4-cyclohexanediol or 1,4-cyclohexanedimethanol.

The cyclic aliphatic diol having 3 to 20 carbon atoms may be included in a content of 5 to 80 mol% with respect to the total diol component. The higher the content of the cyclic aliphatic diol having 3 to 20 carbon atoms in the diol component, the greater the resistance against impact strength of the polyester resin to be manufactured.

In addition, the diol component may further include a linear or branched aliphatic diol having 1 to 20 carbon atoms.

The linear or branched aliphatic diol having 1 to 20 carbon atoms may include a compound represented by Chemical Formula 23 below: 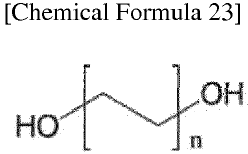 in Chemical Formula 23, n is an integer of 1 to 7.

A more specific example of the compound represented by Chemical Formula 23 may include ethylene glycol.

As a specific example, the polyester resin may include 5 to 60 mol% of isosorbide, 5 to 80 mol% of cyclohexanediol, and the remaining content of ethylene glycol.

Meanwhile, the polyester resin may have a glass transition temperature of 90°C or higher, 100°C or higher, or 90°C to 150°C or 100°C to 130°C The glass transition temperature may be confirmed through DSC measurement data, etc. For example, the glass transition temperature may be measured by using a method including maintaining the polyester resin at 300°C for 5 minutes, followed by slowly cooling to room temperature, and re-scanning at a heating speed of 10°C/min, etc.

The weight average molecular weight of the polyester resin may be 10,000 to 100,000. Examples of the method for measuring the weight average molecular weight are not particularly limited, but for example, a weight average molecular weight on polystyrene conversion measured by GPC may be used. When the weight average molecular weight of the polyester resin is less than 10,000, mechanical properties such as impact strength and tensile strength, etc., may be greatly deteriorated. When the weight average molecular weight of the polyester resin is more than 100,000, molding workability may be decreased due to an increase in melt viscosity.

Meanwhile, examples of a method for manufacturing the polyester resin are not particularly limited, but may be provided, for example, by a method for manufacturing a polyester resin including performing an esterification reaction on a dicarboxylic acid component and a diol component; adding a phosphorus-based stabilizer when the esterification reaction proceeds 80% or more; and performing a polycondensation reaction on the esterification reaction product.

According to the method for manufacturing the polyester resin, a polyester resin exhibiting excellent physical properties such as high heat resistance, flame retardancy, impact resistance, etc., and having excellent appearance characteristic, high transparency and excellent molding characteristic may be provided by using an esterification reaction catalyst including a zinc-based compound, and adding a phosphorus-based stabilizer to a reaction solution at the end of the esterification reaction, for example, at the time point when the reaction proceeds 80% or more, followed by polycondensation of the resultant product of the esterification reaction.

Details of the dicarboxylic acid component and the diol component are the same as described above.

More specifically, the esterification reaction step may be performed by reacting the dicarboxylic acid component and the diol component at a pressure of 0 to 10.0 kg/cm² and a temperature of 150 to 300°C. The esterification reaction conditions may be appropriately controlled depending on specific properties of the polyester resin to be manufactured, a molar ratio of the dicarboxylic acid component to glycol, process conditions, or the like. Specifically, preferable examples of the esterification reaction conditions may be a pressure of 0 to 5.0 kg/cm², more preferably 0.1 to 3.0 kg/cm²; and a temperature of 200 to 270°C, more preferably 240 to 260°C.

In addition, the esterification reaction may be performed in a batch manner or in a continuous manner, and each of raw materials may be separately added. However, it is preferable to be added as a slurry form in which the dicarboxylic acid component is mixed in the diol component. Further, the diol component, which is a solid at room temperature, may be dissolved in water or ethylene glycol, and mixed with the dicarboxylic acid component such as terephthalic acid to form a slurry. Alternatively, the diol component may be melted at 60 °C or higher, and then the dicarboxylic acid components such as terephthalic acid, etc., and other diol components may be mixed to form a slurry. Further, water may be further added to the slurry in which the dicarboxylic acid component and the diol component are mixed to thereby help an increase in fluidity of the slurry.

The molar ratio of the dicarboxylic acid component and the diol component participating in the esterification reaction may be 1 : 1.05 to 1 : 3.0. When the molar ratio of the dicarboxylic acid component to the diol component is less than 1.05, unreacted dicarboxylic acid component may remain in the polymerization reaction, and thus transparency of the polyester resin may be deteriorated. When the molar ratio thereof is more than 3.0, a polymerization reaction speed may be lowered or productivity of the resin may be decreased.

The performing of the polycondensation reaction on the esterification reaction product may include reacting the esterification reaction product of the dicarboxylic acid component and the diol component at a temperature of 150 to 300°C and a reduced pressure of 600 to 0.01 mmHg, for 1 to 24 hours.

The polycondensation reaction may be performed at a reaction temperature of 150 to 300°C, or 200 to 290°C, or 260 to 280°C; and a reduced pressure of 600 to 0.01mmHg, or 200 to 0.05 mmHg, or 100 to 0.1 mmHg. As the reduced pressure condition of the polycondensation reaction is applied, glycol, which is a by-product of the polycondensation reaction, may be removed from the system, and thus when the polycondensation reaction is out of the reduced pressure condition range of 600 to 0.01 mmHg, removal of by-products may be insufficient.

In addition, when the polycondensation reaction is generated out of the temperature range of 150 to 300°C, i.e., when the polycondensation reaction proceeds below 150°C, glycol, which is a by-product of the polycondensation reaction, may not be effectively removed from the system, and thus intrinsic viscosity of the final reaction product may be low, which may deteriorate physical properties of the polyester resin to be manufactured. When the reaction proceeds at 300°C or higher, there is a high possibility that the appearance of the polyester resin to be manufactured is yellowing. Further, the polycondensation reaction may be performed for a necessary time until the intrinsic viscosity of the final reaction product reaches an appropriate level, for example, for an average residence time of 1 to 24 hours.

Meanwhile, the method for preparing the polyester resin composition may further include a step of further adding a polycondensation catalyst. The polycondensation catalyst may be added to the product of the esterification reaction or the transesterification reaction before the start of the polycondensation reaction, may be added to a mixed slurry including the diol component and the dicarboxylic acid component before the esterification reaction, and may be added during the esterification reaction step.

As the polycondensation catalyst, a titanium-based compound, a germanium-based compound, an antimony-based compound, an aluminum-based compound, a tin-based compound or a mixture thereof may be used. Specific examples of the compound may include various known compounds in the corresponding field without limitation.

### Polymer resin composition

In a process of preparing the polymer resin composition, conventional methods and apparatuses used for preparing a blend or a mixture of the polymer resin may be used without any particular limitation. For example, a polyester resin, a polycarbonate resin, a silicone-polycarbonate copolymer; and an impact-reinforcing material may be put into a conventional blender, a mixer, a tumbler, or the like, and mixed through a twin-screw extruder to provide the polymer resin composition. In the process of preparing the polymer resin composition, each of the resins is preferably used in a sufficiently dried state.

A specific mixing ratio is not particularly limited. However, 110 to 1000 parts by weight, or 120 to 500 parts by weight of the polycarbonate resin may be included with respect to 100 parts by weight of the polyester resin.

1 to 50 parts by weight, or 10 to 40 parts by weight of the polysiloxane-polycarbonate copolymer may be included with respect to 100 parts by weight of the polyester resin.

The polymer resin composition may include 5 to 60 parts by weight, or 10 to 50 parts by weight of the impact-reinforcing material with respect to 100 parts by weight of the polysiloxane-polycarbonate copolymer.

The polymer resin composition may further include a compatibilizer including a vinyl-based copolymer grafted with glycidyl (meth)acrylate, a vinyl-based copolymer grafted with an acid anhydride, or a mixture thereof. By including the compatibilizer, the miscibility between the components of the polymer resin composition may be increased to secure excellent molding workability.

The vinyl-based copolymer grafted with glycidyl (meth)acrylate may include an unsaturated nitrile-aromatic vinyl-glycidyl (meth)acrylate copolymer, an alkene-alkyl(meth)acrylate-glycidyl-(meth)acrylate copolymer, or a mixture thereof.

The alkyl(meth)acrylate may be at least one selected from the group consisting of methyl acrylate, ethyl acrylate, propyl acrylate, isopropyl acrylate, butyl acrylate, hexyl acrylate, octyl acrylate, and 2-ethylhexyl acrylate.

Specifically, the unsaturated nitrile-aromatic vinyl-glycidyl (meth)acrylate copolymer may have a glass transition temperature of 20 to 200°Cand a weight average molecular weight of 200 to 300,000. The alkene-alkyl(meth)acrylate-glycidyl (meth)acrylate copolymer may have a glass transition temperature of -150 to 200°C and a weight average molecular weight of 200 to 300,000.

An example of the unsaturated nitrile-aromatic vinyl-glycidyl (meth)acrylate copolymer may be styrene-acrylonitrile-glycol methacrylate copolymer (SAN-GMA). Further, an example of the alkene-alkyl (meth)acrylate-glycidyl (meth)acrylate copolymer may be an ethylene-methyl methacrylate-glycol methacrylate copolymer.

The vinyl-based copolymer grafted with acid anhydride may include an aromatic vinyl-unsaturated nitrile-acid anhydride copolymer, an aromatic vinyl-diene-aromatic vinyl copolymer, an aromatic vinyl-alkene-alkene-aromatic vinyl copolymer, an aromatic vinyl-alkene-diene-aromatic vinyl copolymer, or a mixture of two or more thereof.

The aromatic vinyl-unsaturated nitrile-acid anhydride copolymer may have a glass transition temperature of 20 to 200°C, and a weight average molecular weight of 200 to 300,000.

An example of the aromatic vinyl-unsaturated nitrile-acid anhydride copolymer may be maleic anhydride graft styrene-acrylonitrile copolymer (SAN-g-MAH). In addition, an example of the aromatic vinyl-diene-aromatic vinyl copolymer may be maleic anhydride graft styrene-butadiene-styrene copolymer (SBS-g-MAH). Further, an example of the aromatic vinyl-alkene-alkene-aromatic vinyl copolymer may be maleic anhydride graft styrene-ethylene-propylene-styrene copolymer (SEPS-g-MAH). Further, an example of the aromatic vinyl-alkene-diene-aromatic vinyl copolymer may be maleic anhydride graft styrene-ethylene-butadiene-styrene copolymer (SEBS-g-MAH).

A content of the compatibilizer may be 0.1 wt% to 10 wt% with respect to a total content of the polymer resin composition. When the content of the compatibilizer is less than 0.1 wt%, an effect of improving the molding workability by the compatibilizer may be reduced. When the content of the compatibilizer is more than 10 wt%, the mechanical properties of the polymer resin composition may be reduced.

Specifically, the polymer resin composition may include the compatibilizer in a content of 50 to 100 parts by weight, or 60 to 100 parts by weight, with respect to 100 parts by weight of the impact-reinforcing material.

In addition, the polymer resin composition may further include at least one additive selected from the group consisting of an antioxidant, a lubricant, a light stabilizer, a light absorber, a transesterification inhibitor, a hydrolysis resistant agent, a coupling agent, an inorganic additive, a filler, a dye, a pigment, and a coloring agent.

The hydrolysis resistant agent may be a carbodiimide-based hydrolysis resistant agent, and the carbodiimide-based hydrolysis resistant agent may include a compound having a weight average molecular weight of 50 to 300,000 and represented by Chemical Formula 31 or Chemical Formula 32 below:

[Chemical Formula 31] R₁-N=C=N-R₂

in Chemical Formula 31, R₁ and R₂ are each independently a hydrogen atom, an alkyl group having 1 to 20 carbon atoms, or an aryl group having 6 to 36 carbon atoms. 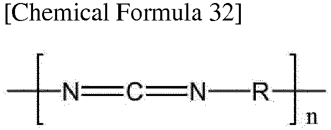 in Chemical Formula 32, R is an alkyl group having 1 to 20 carbon atoms or an aryl group having 6 to 36 carbon atoms, and n is an integer of 2 to 30,000, and indicates an average polymerization degree.

Examples of the antioxidant are not particularly limited, but may include, for example, a hindered phenol-based antioxidant, a phosphite-based antioxidant, and a thioester-based antioxidant. The hindered phenol-based antioxidant may have a weight average molecular weight of 50 to 300,000, and the phosphate-based antioxidant may include at least one selected from the group consisting of Chemical Formulas 33, 34 and 35 below: 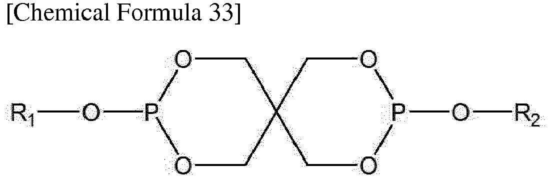 in Chemical Formula 33, R₁ and R₂ are each independently a substituted or unsubstituted alkyl group having 1 to 40 carbon atoms, or a substituted or unsubstituted aryl group having 6 to 40 carbon atoms, 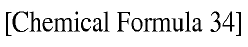 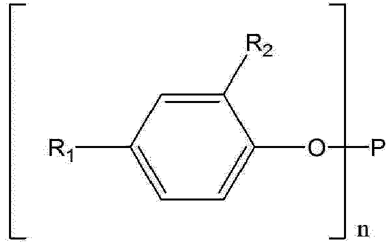 in Chemical Formula 34, R₁ and R₂ are each independently a substituted or unsubstituted alkyl group having 1 to 40 carbon atoms, or a substituted or unsubstituted aryl group having 6 to 40 carbon atoms, and n is an integer of 1 or more and indicates a substituted repeating unit, 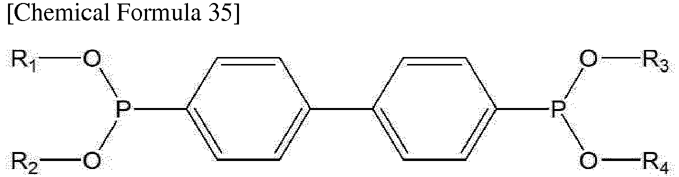 in Chemical Formula 35, R₁, R₂, R₃ and R₄ are each independently a substituted or unsubstituted alkyl group having 1 to 40 carbon atoms, or a substituted or unsubstituted aryl group having 6 to 40 carbon atoms.

Meanwhile, the thioester antioxidant may be a compound represented by the Chemical Formula 36 or 37 below: 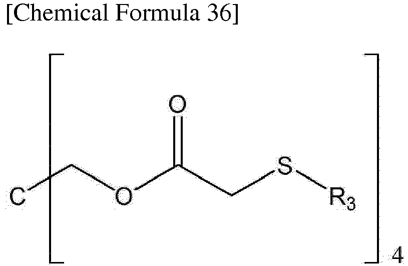 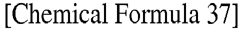 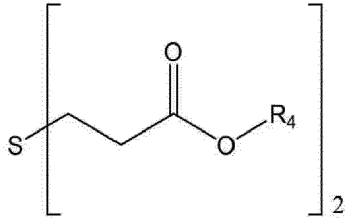 in Chemical Formulas 36 and 37, R₃ and R₄ are each independently a substituted or unsubstituted alkyl group having 1 to 40 carbon atoms, or a substituted or unsubstituted aryl group having 6 to 40 carbon atoms.

The lubricant may be at least one selected from the group consisting of a metal stearate-based lubricant, an amide-based lubricant, a paraffin-based lubricant, and an ester-based lubricant.

The light stabilizer may be a HALS light stabilizer, and the light absorber may be a benzotriazole-based light absorber or a benzophenone-based light absorber.

Meanwhile, the transesterification inhibitor may be a phosphorus compound including at least a hydroxyl functional group and an alkylester functional group, or a hydrazine compound including a repeating unit represented by Chemical Formula 38 below:

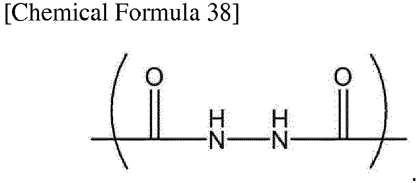

A compound including a glycidyl methacrylate-based repeating unit may be used as an example of the coupling agent.

The polymer resin composition may be molded by various molding methods, for example, molding processes such as injection, extrusion, extrusion blow, injection blow and profile extrusion, etc., and post-processing such as a heat molding process using the same, etc., thereby being implemented into forms such as a pellet, a film, etc.

The polymer resin composition may have a tensile strength of 500 kg/cm² or more as measured by ASTM D638. Further, the polymer resin composition may have a heat deflection temperature of 100°C or higher as measured by ASTM D648. Accordingly, the polymer resin composition may implement high tensile strength and heat resistance.

Meanwhile, the polymer resin composition may be used for components of automobiles, electrical and electronic devices, home appliances, office equipment, or household goods. Specifically, the polymer resin composition may be used for instrument panel module-related plastic components, door trim-related plastic components, lamp housing-related components, wheel cover-related components, automobile interior/exterior garnish-related components, door handle lever components, etc., in the automobiles, and mobile phone housing components, electronic dictionary housing components, CD player components, MP3-related components, and electronic calculator housing components, etc., in the electrical and electronic devices.

Further, the polymer resin composition may be used for refrigerator interior components, washing machine-related plastic components, air conditioner housing components, cleaner housing components, blender housing components, bidet-related components, etc., in the home appliances, multifunction machine internal/external components, printer internal/external components, fax internal/external components, scanner internal/external components, etc., in the office equipment, and kitchen-related plastic components, bathroom-related plastic components, etc., in the household goods.

Yet another embodiment of the present invention provides a molded product including the polymer resin composition according to the exemplary embodiment of the present invention.

The molded product may be obtained by molding the polymer resin composition depending on application uses through various molding methods, for example, molding processes such as injection, extrusion, extrusion blow, injection blow and profile extrusion, etc., and post-processing such as a heat molding process using the same, etc.

As described above, the molded product may be used for components of automobiles, electrical and electronic devices, home appliances, office equipment, or household goods. Specifically, the molded product may be used for instrument panel module-related plastic components, door trim-related plastic components, lamp housing-related components, wheel cover-related components, automobile interior/exterior garnish-related components, door handle lever components, etc., in the automobiles, and mobile phone housing components, electronic dictionary housing components, CD player components, MP3-related components, and electronic calculator housing components, etc., in the electrical and electronic devices.

Further, the molded product may be used for refrigerator interior components, washing machine-related plastic components, air conditioner housing components, cleaner housing components, blender housing components, bidet-related components, etc., in the home appliances, multifunction machine internal/external components, printer internal/external components, fax internal/external components, scanner internal/external components, etc., in the office equipment, and kitchen-related plastic components, bathroom-related plastic components, etc., in the household goods.

The specific shape and size of the molded product may vary depending on the application uses, and examples thereof are not particularly limited, but the molded product may have forms such as a sheet, a container, a pellet, etc.

The description of the polymer resin composition includes the above-described contents regarding the exemplary embodiment of the present invention.

### [Advantageous Effects]

According to the present invention, the polymer resin composition which is excellent in compatibility between components and has improved mechanical properties such as heat resistance, tensile strength, etc., and improved molding workability, and the molded product thereof may be provided.

### [Mode for Invention]

Hereinafter, the present invention is described in detail with reference to Examples. However, the following Examples are only illustrative of the present invention, and do not limit the disclosure of the present invention in any way.

### <Examples 1 to 5: Preparation of polymer resin composition>

### Example 1

2 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 40 wt% of terephthalic acid-isosorbide-1,4-cyclohexanedimethanol-ethylene glycol copolymerized polyester (glass transition temperature Tg of 110°C and weight average molecular weight of 50,000), 55 wt% of polycarbonate, and 5 wt% of polysiloxane-polycarbonate using a twin-screw extruder (Φ: 40 mm, L/D = 44), followed by uniform extrusion process to thereby prepare a pellet.

In the Example 1 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3022PJ manufactured by Samyang Corp., in Korea, the polysiloxane-polycarbonate was ST6-3022PJ manufactured by Samyang Corp., in Korea, the methyl methacrylate-butadiene-styrene graft copolymer was M-300 manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was 1-168 manufactured by ADEKA Corp., in Japan.

### Example 2

2 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 40 wt% of terephthalic acid-isosorbide-1,4-cyclohexanedimethanol-ethylene glycol copolymerized polyester (glass transition temperature Tg of 110°C and weight average molecular weight of 50,000), 50 wt% of polycarbonate, and 10 wt% of polysiloxane-polycarbonate using a twin-screw extruder (Φ: 40 mm, L/D = 44), followed by uniform extrusion process to thereby prepare a pellet.

In the Example 2 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3022PJ manufactured by Samyang Corp., in Korea, the polysiloxane-polycarbonate was ST6-3022PJ manufactured by Samyang Corp., in Korea, the methyl methacrylate-butadiene-styrene graft copolymer was M-300 manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was 1-168 manufactured by ADEKA Corp., in Japan.

### Example 3

2 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 30 wt% of terephthalic acid-isosorbide-1,4-cyclohexanedimethanol-ethylene glycol copolymerized polyester (glass transition temperature Tg of 110°C and weight average molecular weight of 50,000), 60 wt% of polycarbonate, and 10 wt% of polysiloxane-polycarbonate using a twin-screw extruder (Φ: 40 mm, L/D = 44), followed by uniform extrusion process to thereby prepare a pellet.

In the Example 3 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3025PJ manufactured by Samyang Corp., in Korea, the polysiloxane-polycarbonate was ST6-3022PJ manufactured by Samyang Corp., in Korea, the methyl methacrylate-butadiene-styrene graft copolymer was M-300 manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was S-9228 manufactured by DOVER Corp., in U.S.A.

### Example 4

2 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 30 wt% of terephthalic acid-isosorbide-1,4-cyclohexanedimethanol-ethylene glycol copolymerized polyester (glass transition temperature Tg of 120°C and weight average molecular weight of 50,000), 65 wt% of polycarbonate, and 5 wt% of polysiloxane-polycarbonate using a twin-screw extruder (Φ: 40 mm, L/D = 44), followed by uniform extrusion process to thereby prepare a pellet.

In the Example 4 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3025PJ manufactured by Samyang Corp., in Korea, the polysiloxane-polycarbonate was ST6-3022PJ manufactured by Samyang Corp., in Korea, the methyl methacrylate-butadiene-styrene graft copolymer was M-300 manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was S-9228 manufactured by DOVER Corp., in U.S.A.

### Example 5

3 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 30 wt% of terephthalic acid-isosorbide-1,4-cyclohexanedimethanol-ethylene glycol copolymerized polyester (glass transition temperature Tg of 120°C and weight average molecular weight of 50,000), 60 wt% of polycarbonate, and 10 wt% of polysiloxane-polycarbonate using a twin-screw extruder (Φ: 40 mm, L/D = 44), followed by uniform extrusion process to thereby prepare a pellet.

In the Example 5 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3030PJ manufactured by Samyang Corp., in Korea, the polysiloxane-polycarbonate was ST6-3022PJ manufactured by Samyang Corp., in Korea, the methyl methacrylate-butadiene-styrene graft copolymer was M-300 manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was S-9228 manufactured by DOVER Corp., in U.S.A.

### <Comparative Examples 1 to 2: Preparation of polymer resin composition>

### Comparative Example 1

2 parts by weight of acrylonitrile-styrene-glycidyl methacrylate, 0.2 part by weight of a phenol-based primary oxidation stabilizer, and 0.2 part by weight of a phosphite-based secondary oxidation stabilizer except for the methyl methacrylate-butadiene-styrene graft copolymer were added to 100 parts by weight of a resin composition including 40 wt% of terephthalic acid-isosorbide-1,4-cyclohexanedimethanol-ethylene glycol copolymerized polyester (glass transition temperature Tg of 110°C and weight average molecular weight of 50,000), 55 wt% of polycarbonate, and 5 wt% of polysiloxane-polycarbonate using a twin-screw extruder (Φ: 40 mm, L/D = 44), followed by uniform extrusion process to thereby prepare a pellet.

In the Comparative Example 1 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3022PJ manufactured by Samyang Corp., in Korea, the polysiloxane-polycarbonate was ST6-3022PJ manufactured by Samyang Corp., in Korea, the acrylonitrile-styrene-glycidyl methacrylate wasSAG-002 manufactured by SUNNY FC Corp., in China, the phenol-based primary oxidation stabilizer was AO-60 manufactured by ADEKA Corp., in Japan, and the phosphite-based secondary oxidation stabilizer was 1-168 manufactured by ADEKA Corp., in Japan.

### Comparative Example 2

2 parts by weight of a methyl methacrylate-butadiene-styrene graft copolymer, 2 parts by weight of an acrylonitrile-styrene-glycidyl methacrylate copolymer, 0.2 part by weight of a phenol-based primary oxidation stabilizer, and 0.2 part by weight of a phosphite-based secondary oxidation stabilizer were added to 100 parts by weight of a resin composition including 90 wt% of terephthalic acid-isosorbide-1,4-cyclohexanedimethanol-ethylene glycol copolymerized polyester (glass transition temperature Tg of 110°C and weight average molecular weight of 50,000), and 10 wt% of polysiloxane-polycarbonate without including the silicone-polycarbonate copolymer, using a twin-screw extruder (Φ: 40 mm, L/D = 44), followed by uniform extrusion process to thereby prepare a pellet.

In the Comparative Example 2 above, the terephthalic acid-isosorbide-1,4-cyclohexanedimethanol-ethylene glycol copolymerized polyester was ECOZEN which is a high-impact environmentally friendly resin manufactured by SK Chemicals Corp., in Korea, the polycarbonate was 3022PJ manufactured by Samyang Corp., in Korea, the methyl methacrylate-butadiene-styrene graft copolymer was M-300 Corp., manufactured by KANEKA Corp., in Japan, the acrylonitrile-styrene-glycidyl methacrylate was SAG-002 manufactured by SUNNY FC Corp., in China, the phenol-based primary oxidation stabilizer was AO-60 manufactured by ADEKA Corp., in Japan, and the phosphite-based secondary oxidation stabilizer was 1-168 manufactured by ADEKA Corp., in Japan.

### <Experimental Example : Measurement of physical properties of polymer resin compositions obtained in Examples and Comparative Examples>

The pellets prepared according to Examples 1 to 5 and Comparative Examples 1 and 2 were injected in the same manner at an injection temperature of 250°C using an injection machine, then injected specimens were conditioned under 23±2°C, 50±5% relative humidity, and physical properties of each of the pellets were measured by the following methods described in Experimental Examples below.

### Experimental Example 1 : Measurement of impact strength

According to ASTM D 256, test specimens were prepared, and impact strength thereof was measured using an Izod impact tester (Toyoseiki).

### Experimental Example 2 : Measurement of tensile characteristic

According to ASTM D 638, test specimens were prepared, and tensile strength thereof was measured using a universal testing machine (Zwick Roell Z010).

### Experimental Example 3: Measurement of heat resistance

According to ASTM D 648, test specimens were prepared, heat deflection temperature thereof was measured using a heat deflection temperature (HDT) tester (Toyoseiki), and the heat resistance was evaluated by using the measured heat deflection temperature.

The results of the Experimental Examples of the Examples and Comparative Examples are shown in Tables 1 and 2 below.

**(Table 1)**

| Results of Experimental Examples of Examples | | | | | | |
|---|---|---|---|---|---|---|
| Classification | unit | Example | | | | |
| | | 1 | 2 | 3 | 4 | 5 |
| Izod Impact strength (1/8") | J/m | 840 | 860 | 860 | 860 | 860 |
| Izod Impact strength (1/4") | J/m | 150 | 180 | 180 | 150 | 185 |
| Tensile strength | kg/cm² | 570 | 570 | 575 | 570 | 570 |
| Elongation | % | 140 | 150 | 155 | 145 | 150 |
| Heat deflection temperature (1.82MPa) | °C | 110 | 110 | 114 | 118 | 117 |

**(Table 2)**

| Results of Experimental Examples of Comparative Examples | | | |
|---|---|---|---|
| Classification | unit | Comparative Example | |
| | | 1 | 2 |
| Izod impact strength (1/8") | J/m | Extrusion could not be performed. (lack of compatibility) | 850 |
| Izod impact strength (1/4") | J/m | | 180 |
| tensile strength | kg/cm² | | 490 |
| Elongation | % | | 150 |
| Heat deflection temperature (1.82MPa) | °C | | 90 |

As shown in Table 1, it was confirmed that the polymer resin compositions of Examples had higher compatibility than that of Comparative Example 1 and thus, had high molding workability. On the other hand, it was confirmed that the resin composition of Comparative Example 1 had reduced compatibility and thus, was not able to be molded.

In addition, the polymer resin compositions of Examples had excellent heat resistance and tensile property as compared with that of Comparative Example 2. Specifically, the polymer resin compositions of the Examples had tensile strength of 500 kg/cm² or more, whereas the polymer resin composition of Comparative Example 2 had tensile strength of 490 kg/cm². Further, the heat deflection temperature of the polymer resin compositions of Examples was 100°C or higher, whereas the heat deflection temperature of the polymer resin composition of Comparative Example 2 was 90°C.

## Claims

1. A polymer resin composition comprising:
a polyester resin that includes a diol component residue including a heterocyclic aliphatic diol having 3 to 20 carbon atoms and a dicarboxylic acid component residue, and has a glass transition temperature (measured by DSC) of 90°Cor higher;
a polycarbonate resin;
a polysiloxane-polycarbonate copolymer; and
an impact-reinforcing material that includes a core including a diene-based copolymer, an inner layer shell including a (meth)acrylate/aromatic vinyl copolymer, and an outer layer shell including an aromatic vinyl-based polymer.

2. The polymer resin composition of claim 1,
wherein the heterocyclic aliphatic diol having 3 to 20 carbon atoms includes a compound represented by Chemical Formula 24 below: 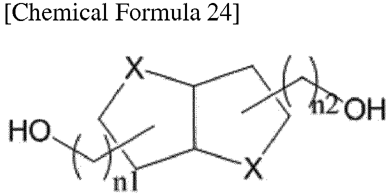 in Chemical Formula 24, n1 and n2 are each independently an integer of 0 to 3, and X is oxygen or sulfur.

3. The polymer resin composition of claim 1,
wherein the heterocyclic aliphatic diol having 3 to 20 carbon atoms has a content of 5 mol% to 60 mol% with respect to the total diol component.

4. The polymer resin composition of claim 1,
wherein the diol component further includes a cyclic aliphatic diol having 3 to 20 carbon atoms.

5. The polymer resin composition of claim 4,
wherein the cyclic aliphatic diol having 3 to 20 carbon atoms includes a compound represented by Chemical Formula 21 or 22 below: 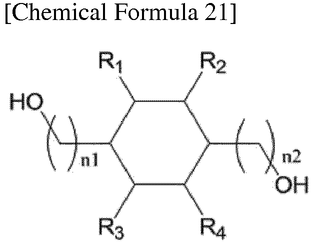 in Chemical Formula 21, R₁, R₂, R₃ and R₄ are each independently hydrogen or a substituted or unsubstituted alkyl group having 1 to 5 carbon atoms, and n1 and n2 are each independently an integer of 0 to 3, and 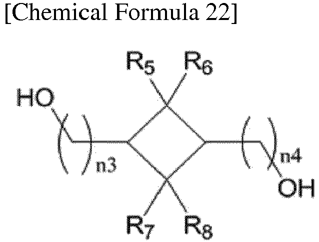 in Chemical Formula 22, R₅, R₆, R₇ and R₈ are each independently hydrogen or a substituted or unsubstituted alkyl group having 1 to 5 carbon atoms, and n3 and n4 are each independently an integer of 0 to 3.

6. The polymer resin composition of claim 4,
wherein the cyclic aliphatic diol having 3 to 20 carbon atoms has a content of 5 mol% to 80 mol% with respect to the total diol component.

7. The polymer resin composition of claim 1,
wherein the polycarbonate resin includes at least one selected from the group consisting of a polycarbonate resin in which a melt mass-flow rate (300°C, 1.2 kg load) measured by ASTM D1238 is less than 5 g/10 min; a polycarbonate resin in which a melt mass-flow rate (300°C, 1.2 kg load) measured by ASTM D1238 is 5 g/10 min to 11 g/10 min; a polycarbonate resin in which a melt mass-flow rate (300°C 1.2 kg load) measured by ASTM D1238 is more than 11 g/10 min.

8. The polymer resin composition of claim 1,
wherein the polycarbonate resin has a content of 110 parts by weight to 1000 parts by weight with respect to 100 parts by weight of the polyester resin.

9. The polymer resin composition of claim 1,
wherein the polysiloxane-polycarbonate copolymer has a content of 1 parts by weight to 50 parts by weight with respect to 100 parts by weight of the polyester resin.

10. The polymer resin composition of claim 1,
wherein the dicarboxylic acid component includes an aromatic dicarboxylic acid having 8 to 20 carbon atoms or an aliphatic dicarboxylic acid having 4 to 20 carbon atoms.

11. The polymer resin composition of claim 1,
wherein a content of the impact-reinforcing material is 0.1 wt% to 10 wt% with respect to a total content of the polymer resin composition.

12. The polymer resin composition of claim 1,
wherein the impact-reinforcing material includes 40 to 90 parts by weight of the core including the diene-based copolymer, 5 to 40 parts by weight of the inner layer shell including the (meth)acrylate/aromatic vinyl copolymer, and 5 to 20 parts by weight of the outer layer shell including the aromatic vinyl-based polymer.

13. The polymer resin composition of claim 12,
wherein the core includes a diene-based copolymer obtained by polymerizing a monomer mixture containing 30 wt% to 100 wt% of a diene-based monomer; 0 to 70 wt% of an aromatic vinyl monomer; 0 wt% to 10 wt% of a copolymerizable vinyl-based monomer; and 0 wt% to 5 wt% of a cross-linking monomer,
the inner layer shell includes a (meth)acrylate/aromatic vinyl copolymer obtained by polymerizing a monomer mixture containing 60 wt% to 98 wt% of an aromatic vinyl monomer; 2 wt% to 40 wt% of a (meth)acrylic acid ester monomer containing a hydroxyl group; and 0 wt% to 20 wt% of a copolymerizable vinyl-based monomer, and
the outer shell includes an aromatic vinyl-based polymer obtained by polymerizing a monomer mixture containing 10 wt% to 100 wt% of an aromatic vinyl monomer; 0 wt% to 90 wt% of alkyl(meth)acrylate having 1 to 8 carbon atoms in the alkyl group; and 0 wt% to 50 wt% of a copolymerizable vinyl-based monomer.

14. The polymer resin composition of claim 1,
wherein the polysiloxane-polycarbonate copolymer includes 1 wt% to 20 wt% of a polysiloxane repeating unit.

15. The polymer resin composition of claim 1,
wherein the polysiloxane-polycarbonate copolymer has a glass transition temperature (measured by DSC) of 50°Cto 200°C.

16. The polymer resin composition of claim 1, further comprising:
at least one additive selected from the group consisting of a compatibilizer including a vinyl-based copolymer grafted with glycidyl (meth)acrylate or a vinyl-based copolymer grafted with an acid anhydride, an antioxidant, a lubricant, a light stabilizer, a light absorber, a transesterification inhibitor, and a hydrolysis resistant agent.

17. The polymer resin composition of claim 1,
wherein a tensile strength measured by ASTM D638 is 500 kg/cm² or more.

18. The polymer resin composition of claim 1,
wherein a heat deflection temperature measured by ASTM D648 is 100°C or higher.

19. A molded product comprising the polymer resin composition of claim 1.

20. The molded product of claim 19, wherein:
the molded product is used for components of automobiles, electrical and electronic devices, home appliances, office equipment, or household goods.
